# EUROPEAN PATENT APPLICATION

(11) **EP 1 398 653 A1**
(43) Date of publication of application: **17.03.2004**
(21) Application number: 02027634.1
(22) Date of filing: 11.12.2002
(51) Int. Cl.: G02B 6/16, H04B 10/17, H04B 10/18

(54) **Optical fibers and modules for dispersion compensation with simultaneous raman amplification**

(30) Priority: 13.09.2002 US 243211
(71) Applicant: FITEL USA CORPORATION (a Delaware Corporation), Norcross, Georgia 30071 (US)
(72) Inventor: Gaarde, Peter, 2500 Valby (DK); Gruner-Nielsen, Lars, 2700 Broenshoej (DK); Larsen, Christian, 2620 Albertslund (DK); Palsdottir, Bera, 2100 Koebenhavn (DK); Qian, Yujun, 2100 Copenhagen (DK)
(74) Representative: Schoppe, Fritz, Dipl.-Ing.

(57) **Abstract**

An optical fiber suited for dispersion compensation with simultaneous Raman amplification. The fiber has a central core and an index profile that defines successively concentric regions radially outward of the core. The core has a diameter of between 2 and 5 microns (µm) and a refractive index difference (Δn) with respect to the outer cladding of between 0.012 and 0.035. A trench region adjacent the core is between 2 and 6 µm wide and has a negative Δn of between -0.015 and -0.003. A ring region adjacent the trench region is between 1 and 5 µm wide and has a Δn of between 0.001 and 0.015, and an inner cladding surrounding the ring region has a width of between zero and 5 µm and a Δn of between -0.011 and 0.001. A dispersion slope compensating module (DSCM) including the fiber obtains a relatively high Raman gain with respect to conventional DSCMs that are pumped for Raman amplification.

## Description

### BACKGROUND OF THE INVENTION

### Field of the Invention

This invention relates to optical fibers for use in dispersion compensation, and to dispersion compensating modules that include such fibers.

### Discussion of the Known Art

Dispersion slope compensating modules or DSCMs including one or more lengths of dispersion compensating fibers (DCFs), are generally known as a means for compensating for chromatic dispersion of light signals when transmitted through a fiber of a fiber optic communication system or network. DSCMs enable existing systems to handle signals with bandwidths and wavelengths for which the systems were not originally designed, without the need for replacing long spans of installed fiber optic cable with newer, higher rated cables. Because DSCMs may themselves use several kilometers of fiber having a certain signal attenuation factor, it is useful to combine the functions of dispersion compensation and Raman amplification into a single, Raman amplified, dispersion compensating module. See the above mentioned '820 application all relevant portions of which are incorporated by reference. DSCMs are also sometimes referred to simply as dispersion compensating modules or DCMs.

Dispersion compensating fibers happen also to be well suited for use as gain media for Raman amplification. This is because fibers used for dispersion compensation tend to have a high concentration of germanium in the core; the core has a Δn above 0.020 where An is the absolute index difference with respect to the index of the surrounding cladding; and the core has a small effective area typically less than 20 µm² at a wavelength of 1550 nanometers (nm). Accordingly, there is an advantage in using a DCF that is part of a dispersion compensating module also as a gain medium. Instead of introducing additional loss, light signals are amplified by the DSCM by a factor limited only by whatever pump power is available for Raman amplification.

The broad concept of Raman pumping a fiber in a DSCM to compensate for signal loss is known. See, e.g., U.S. Patent 5,887,093 (Mar. 23, 1999); and S.A.E. Lewis, et al., Broadband high-gain dispersion compensating Raman amplifier, 36 Electronics Letters, No. 16 (Aug. 3, 2000) at page 1355; all relevant portions of which are incorporated by reference. A problem arises, however, in that the chromatic dispersion of the DCF in the module is often so high that the required dispersion is attained by a length of fiber which is too short to enable the fiber also to achieve effective gain when pumped for Raman amplification. Further, the use of a discrete Raman amplifier having a fiber that is optimized for Raman amplification in order to compensate for loss introduced by a DSCM would introduce additional dispersion to the system, and the added dispersion would then need to be compensated by a second DSCM introducing additional loss.

### SUMMARY OF THE INVENTION

According to the invention, an optical fiber suitable for use for dispersion compensation with simultaneous Raman amplification has a central core, an outer cladding, and a refractive index profile through a cross section of the fiber with respect to the outer cladding. The core has a diameter of between 2 and 5 microns (µm), and a difference (Δn) between the refractive index of the core and the outer cladding of between 0.012 and 0.035. The fiber includes a trench region adjacent the core, a ring region adjacent the trench region, and an inner cladding intermediate the ring region and the outer cladding. The trench region has a width in the index profile of between 2 and 6 µm and a negative An of between -0.015 and -0.003. The ring region has a width in the index profile of between 1 and 5 µm and a An of between 0.001 and 0.015, and the inner cladding has a width in the profile of between 0 and 5 µm and a An of between -0.011 and 0.001.

According to another aspect of the invention, a dispersion slope compensating module includes a first fiber having a signal input end and an output end opposite the signal input end, and a pump light source coupled to the first fiber in such manner as to obtain Raman amplification with respect to a light signal applied to the signal input end of the first fiber. The first fiber has a central core, an outer cladding, and a refractive index profile through a cross section of the fiber with respect to the outer cladding. The core has a diameter of between 2 and 5 microns (µm), and a difference (Δn) between the refractive index of the core and the outer cladding that is between 0.012 and 0.035. The fiber includes a trench region adjacent the core, a ring region adjacent the trench region, and an inner cladding intermediate the ring region and the outer cladding. The trench region has a width in the index profile of between 2 and 6 µm and a negative Δn of between -0.015 and -0.003. The ring region has a width in the index profile of between 1 and 5 µm and a Δn of between 0.001 and 0.015, and the inner cladding has a width in the profile of between 0 and 5 µm and a Δn of between -0.011 and 0.001.

For a better understanding of the invention, reference is made to the following description taken in conjunction with the accompanying drawing and the appended claims.

### BRIEF DESCRIPTION OF THE DRAWING

In the drawing:
FIG. 1 is a cross sectional view of a dispersion compensating fiber (DCF) according to the invention;
FIG. 2 is a graph showing refractive index profiles of two DCFs according to the invention and that of an existing fiber;
FIG. 3 is a graph showing dispersion of the two inventive DCFs and that of the existing fiber;
FIG. 4 is a graph showing relative dispersion slope (RDS) of the two inventive DCFs and that of the existing fiber;
FIG. 5 is a schematic block diagram of a test measurement arrangement used to evaluate performance of three dispersion slope compensating modules (DSCMs) that were constructed using the inventive and existing fibers;
FIG. 6 is a graph showing net gain and noise figure measured for each of the three DSCMs;
FIG. 7 is a graph showing multi-path interference (MPI) measured for each of the three DSCMs; and
FIG. 8 is a block diagram of a fiber optic transmission system including a DSCM according to the invention.

### DETAILED DESCRIPTION OF THE INVENTION

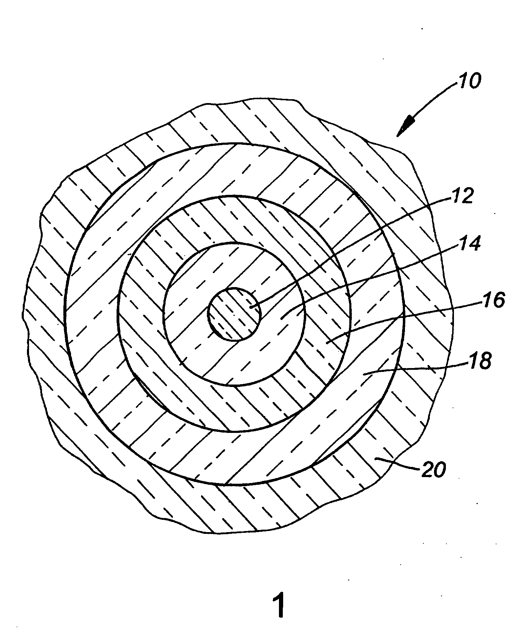

FIG. 1 shows a cross section of an optical fiber 10 that is suited for dispersion compensation with simultaneous Raman amplification, according to the invention. As demonstrated further below, the fiber 10 achieves a significantly higher Raman gain than current DCFs for a given level of pump power.

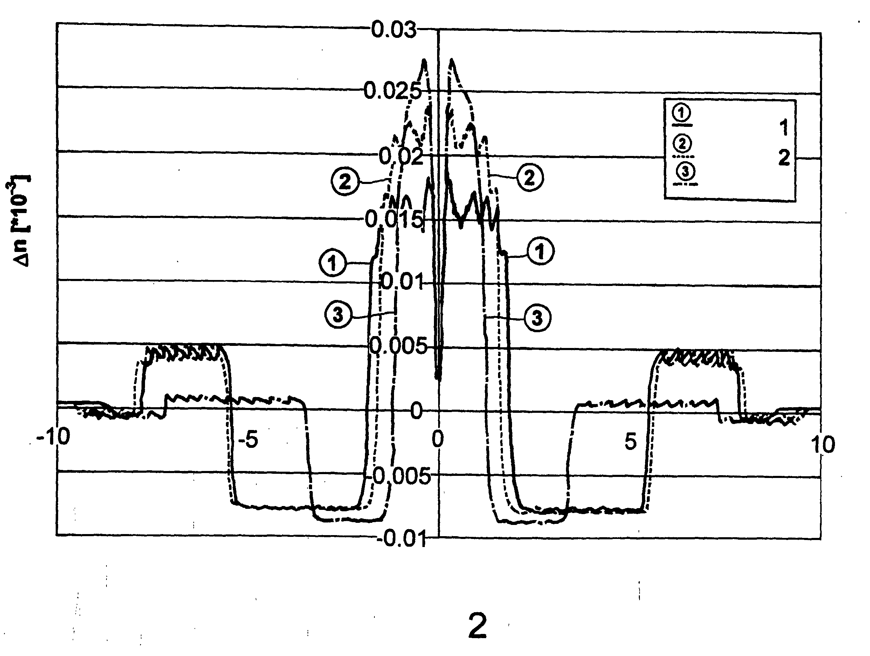

The fiber 10 has a refractive index profile in terms of Δn (see FIG. 2) that defines five regions through the cross section of the fiber. The five regions include:
1. A central core 12 which defines a raised (positive) index region with respect to an outer cladding 20. The core 12 is formed of SiO₂ doped with an appropriate amount of GeO₂ to achieve a desired refractive index.
2. A trench 14 surrounding the core 12. The trench 14 defines a depressed (negative) index region and generally comprises SiO₂ doped with an appropriate amount of GeO₂ and/or F to achieve a desired index.
3. A ring 16 surrounding the trench 14. The ring 16 defines a raised index region and generally comprises SiO₂ doped with an appropriate amount of GeO₂ to achieve a desired index.
4. A deposited inner cladding 18 surrounding the ring 16. The inner cladding 18 is a region having close to the same refractive index as the outer cladding 20.
5. The outer cladding 20, which is formed of SiO₂. Only a portion of the entire cross section of the outer cladding 20, adjacent the inner cladding, appears in FIG. 1.

The inventive fiber 10 was developed to obtain the following features:
A. The relative dispersion slope (RDS) of the fiber 10 is such as to match closely that of a transmission fiber of the kind typically encountered in systems to be upgraded.
B. The chromatic dispersion of the fiber 10 is of such a value that the length of the fiber 10 needed to compensate for dispersion in a span of a given transmission fiber, is consistent with an optimal length of the fiber 10 needed to achieve a desired Raman gain.
C. Desirable Raman gain properties, including minimum noise figure.
D. Minimal double Rayleigh scattering and multipath interference (MPI) when using the fiber as a Raman amplifier.
E. Desirable spectral properties in both pump- and signal-bands, i.e., relatively low attenuation at wavelengths from, e.g., 1400 to 1650 nm.

Experiments and simulations were conducted. It was discovered that an optical fiber having an index profile as described above and with the following parameters, is well suited for dispersion compensation with simultaneous Raman amplification when used alone or in combination with another fiber in a dispersion compensating module.
I. A Δn for the core 12 of between 0.012 and 0.035, and preferably between 0.015 and 0.022. The lower limit ensures a relatively high Raman gain coefficient, while the upper limit is chosen to keep the spectral attenuation low.
II. A depressed or negative Δn for the trench 14 of between - 0.015 and -0.003, and preferably between -0.010 and -0.006 to obtain a low effective area and a high relative dispersion slope for the fiber 10. The trench 14 is also relatively wide with a width of between 2 and 6 µm. As used herein, the term "width" as applied to a region in the index profile of the fiber 10 means the radial distance over which the region extends in FIG. 1.
III. A An for the ring 16 of between 0.001 and 0.015, and preferably between 0.003 and 0.005 to improve bending characteristics of the fiber.

### EXAMPLE

Two fibers, designated herein as R-DCF-1 and R-DCF-2, were produced having index profiles in their cross sections within the above ranges. The dimensions and index values (in terms of Δn) of the two fibers are given in the following tables.

| R-DCF-1 | | |
|---|---|---|
| Region | Dimension | Index difference to outer cladding |
| Core 12 | Radius = 1.8 µm | Δn = 0.0215 |
| Trench 14 | Width = 3.62 µm | Δn = -0.0078 |
| Ring 16 | Width = 2.34 µm | Δn = 0.0040 |
| Cladding 18 | Width = 1.65 µm | Δn = -0.0006 |
| Outer Cladding 20 | Radius = 62.5 µm | Δn = 0 |

| R-DCF-2 | | |
|---|---|---|
| Region | Dimension | Index difference to outer cladding |
| Core 12 | Radius = 1.56 µm | Δn = 0.0155 |
| Trench 14 | Width = 3.95 µm | Δn = -0.0078 |
| Ring 16 | Width = 2.39 µm | Δn = 0.0040 |
| Cladding 18 | Width = 1.38 µm | Δn = -0.0006 |
| Outer Cladding 20 | Radius = 62.5 µm | Δn = 0 |

An optical fiber's Raman gain efficiency is given by a so-called Raman Figure-of-Merit (FOM). The Raman FOM is defined as the Raman gain coefficient measured at a certain pump wavelength and normalized to the effective area of a given fiber, divided by the fiber's spectral attenuation at the pump wavelength. The Raman FOM has units of [W⁻¹dB⁻¹]. Further, Rayleigh backscattering in optical fibers is a primary cause of Multipath Interference (MPI), also referred to as Double Rayleigh Backscattering (DRB), in Raman amplification. Large backscattering results in a bigger penalty due to MPI. Raman FOM and Rayleigh backscattering values were measured for various fibers, including the inventive fibers R-DCF-1 and R-DCF-2, and are given below.

| **Fiber** | **Raman FOM @1453 nm [W**^{**-1**}**dB**^{**-1**}**]** | **Rayleigh backscattering @1550 nm [10**^{**-6**}**m**^{**-1**}**]** |
|---|---|---|
| SSMF | 1.7 | 0.060 |
| Truewave RS | 2.5 | 0.095 |
| HS-DK | 4.4 | 0.59 |
| WB-DK | 4.6 | 0.36 |
| EHS-DK | 4.9 | 0.56 |
| Raman fiber | 5.8 | 0.36 |
| R-D C F 1 | 5.4 | 0.31 |
| R-DCF 2 | 5.8 | 0.49 |

In the above table, SSMF connotes a standard single mode transmission fiber. Truewave RS is a non-zero dispersion fiber (NZDF) typically used for transmission. HS-DK, WB-DK and EHS-DK are all existing dispersion compensating fibers available from OFS Fitel. The "Raman fiber" is a fiber that is especially well suited for Raman amplification, and is also available from OFS Fitel.

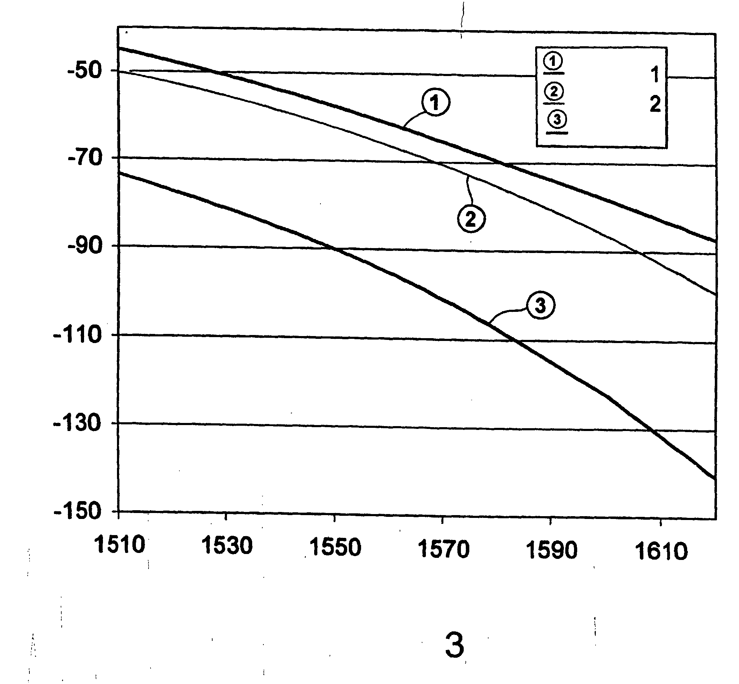

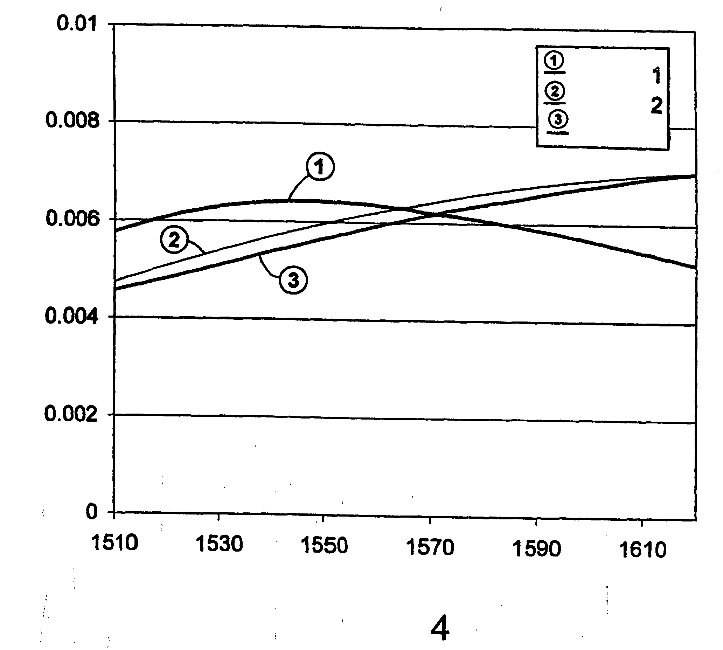

FIG. 2 is a graph showing relative index profiles labeled "1" and "2" for the inventive fibers R-DCF-1 and R-DCF-2, and a relative index profile, labeled "3", for the HS-DK (or "High Slope" DK) fiber. FIG. 3 is a graph showing dispersion of the two fibers R-DCF-1 and R-DCF-2, and that of the HS-DK fiber as a function of wavelength, and FIG. 4 shows the RDS of all three fibers as a function of wavelength.

The HS-DK fiber is intended to match the dispersion slope of the Truewave RS transmission fiber in the L-band (1570 to 1605 µm). The two fibers R-DCF-1 and R-DCF-2 have substantially the same RDS at 1585 nm as the HS-DK fiber (see FIG. 4) but exhibit significantly improved Raman FOMs, as shown below.

| Fiber | HS-DK | R-DCF-1 | R-DCF-2 |
|---|---|---|---|
| Spectral attenuation @1585 nm [dB/km] | 0.57 | 0.34 | 0.42 |
| Dispersion (@1585 nm [ps/nm/km] | -111 | -71 | -78 |
| RDS @1585 nm [1/nm] | 0.0065 | 0.0060 | 0.0067 |
| Effective area @1580 nm[µm²] | 15.6 | 21.0 | 15.5 |
| Raman gain efficiency with pump @ 1453 nm [1/W/km] | 3.6 | 2.1 | 3.2 |
| Raman FOM, pump @1453 nm [1/W/dB] | 4.4 | 5.4 | 5.8 |
| Rayleigh backscattering [10⁻⁶m⁻¹] | 0.59 | 0.31 | 0.49 |
| Polarization Mode Dispersion (PMD) [ps/√km] | < 0.2 | < 0.1 | < 0.1 |

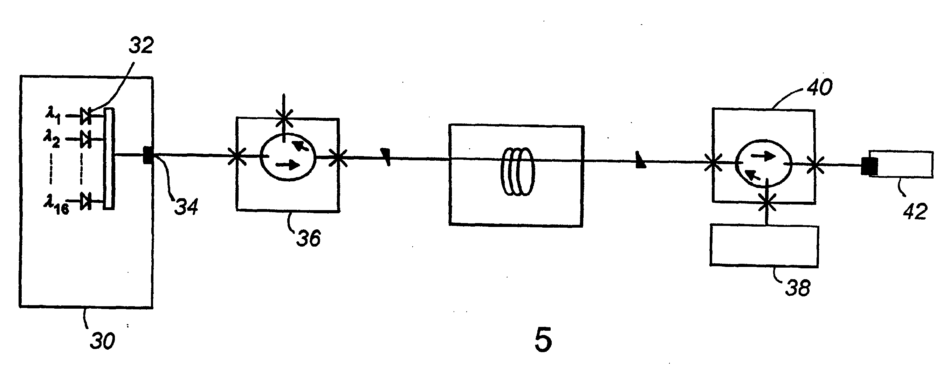

Three dispersion slope compensating modules intended to compensate for chromatic dispersion produced in a 50 km span of Truewave RS transmission fiber in L-band, were constructed. The three modules each included lengths of the EHS-DK compensating fiber, in combination with the HS-DK fiber (module DSCM-1), the inventive R-DCF-1 fiber (module DSCM-2), and the inventive R-DCF-2 compensating fiber (module DSCM-3), respectively. Simulations using realistic system input parameters were performed on the modules as discussed below with reference to FIGS. 5 to 7.

Lengths of fibers in each of the three modules tested, were as follows:

| | |
|---|---|
| Module | Fiber lengths (meters) |
| DSCM-1: | 839 m of EHS-DK + 1333 m of HS-DK |
| DSCM-2: | 916 m of EHS-DK + 2007 m of R-DCF-1 |
| DSCM-3: | 879 m of EHS-DK + 2084 m of R-DCF-2 |

FIG. 5 is a schematic diagram of a test measurement configuration used to test for each of the three DSCMs. An input stage 30 included an array of laser diodes 32 for producing 16 equally spaced channels at wavelengths of from 1554 to 1608 nm. The input power was 1.68 mW per channel, and a combined output of the stage 30 was applied through an angled physical contact (APC) connector 34 to an input port of a circulator 36.

A pump signal stage 38 produced five pump signals at wavelengths (and powers) of 1444 nm (190 mW), 1457 nm (190 mW), 1470 nm (110 mW), 1491 nm (215 mW) and 1508 nm (135 mW). The pump signals were applied to an input port of another circulator 40 an output port of which was coupled to an output of the DSCM under test, thus causing the DSCM to be counter or backward pumped. Another output of the circulator 40 was coupled to an optical spectrum analyzer (OSA) 42.

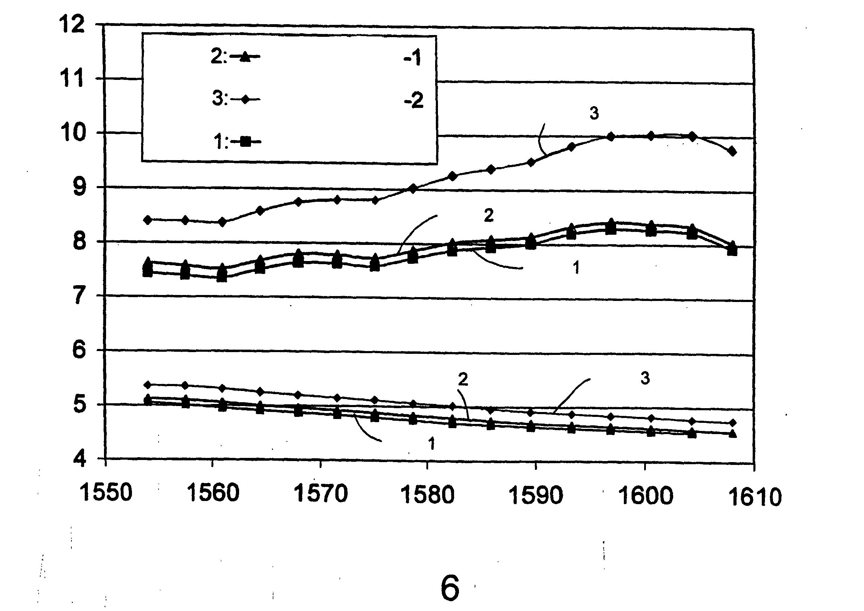

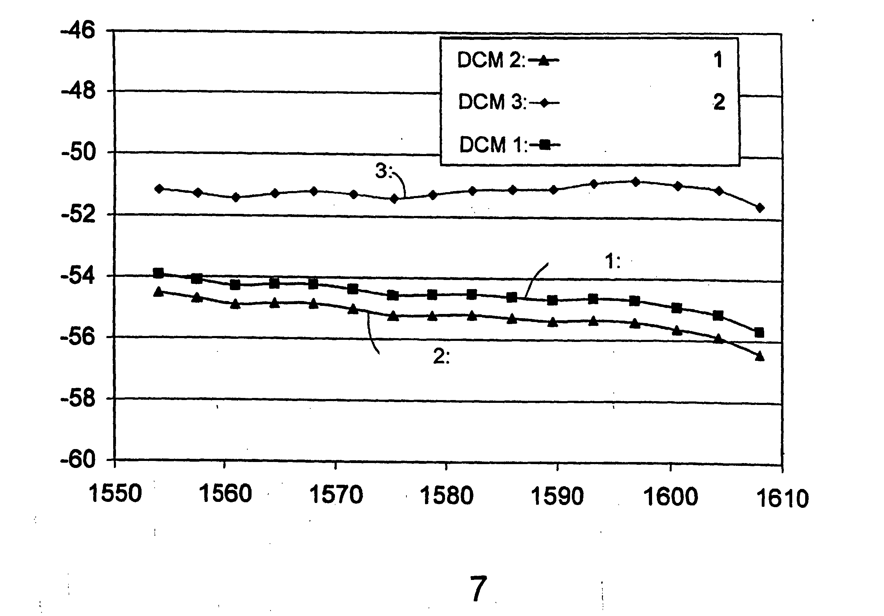

FIG. 6 is a graph showing net gain and noise figure for each of the three modules as a function of wavelength, and FIG. 7 plots the MPI for each of the three modules. Because the dispersions of the inventive fibers R-DCF-1 and R-DCF-2 are numerically lower than that of HS-DK, the lengths (2007 m and 2084 m) of the inventive fibers needed to compensate for dispersion in the transmission fiber were greater than the length of HS-DK which would have been needed to achieve the same level of compensation. The greater lengths of the fibers 10 provide a longer gain medium for Raman amplification. Rayleigh backscattering and resulting MPI are lower and the Raman FOM is higher for both inventive fibers R-DCF-1 and R-DCF-2, making them better suited for Raman amplification than the HS-DK fiber. The module (DSCM-3) using the R-DCF-2 fiber realized an improvement in gain of up to 1.6 dB. The module (DSCM-2) with the R-DCF-1 fiber obtained a slight improvement in both gain and in MPI. Also, the RDS is substantially the same for all three fibers. It was also found that lengths of the inventive fibers greater than about three meters will behave as single mode fibers at a wavelength of 1550 nm.

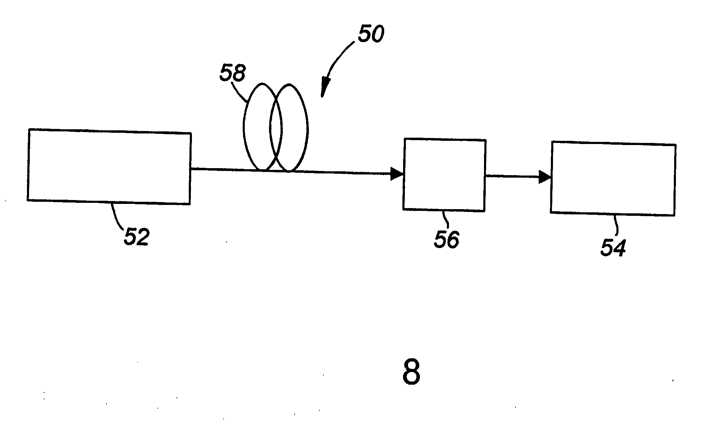

FIG. 8 is a block diagram of a fiber optic transmission system 50, including an optical transmitter 52, an optical receiver 54, and a dispersion slope compensating module 56 according to the invention. The DSCM 56 is connected in series with a span of transmission fiber 58 (which may be a non-zero dispersion fiber or NZDF) that forms part of a light signal path between the transmitter 52 and the receiver 54. Both of the transmitter 52 and the receiver 54 may be included within corresponding optical transceivers currently provided in fiber optic communication systems or networks.

While the foregoing represents preferred embodiments of the invention, it will be understood by those skilled in the art that various modifications and changes may be made without departing from the spirit and scope of the invention, and that the invention includes all such modifications and changes as come within the scope of the following appended claims.

## Claims

1. An optical fiber suitable for dispersion compensation with simultaneous Raman amplification, comprising a central core and an outer cladding, and having a refractive index profile through a cross section of the fiber with respect to the outer cladding, wherein:
the core has a diameter of between 2 and 5 microns (µm) and a difference (Δn) between the refractive index of the core and the outer cladding that is between 0.012 and 0.035;
the fiber includes a trench region adjacent the core, a ring region adjacent the trench region, and an inner cladding intermediate the ring region and the outer cladding;
the trench region has a width in said index profile of between 2 and 6 µm and a negative Δn of between -0.015 and -0.003;
the ring region has a width in said index profile of between 1 and 5 µm and a Δn of between 0.001 and 0.015; and
the inner cladding has a width in said index profile of between 0 and 5 µm and a An of between -0.011 and 0.001.

2. An optical fiber according to claim 1, wherein the outer cladding has an overall diameter of between 80 and 200 µm.

3. An optical fiber according to claim 1, wherein the fiber has a Raman figure of merit (FOM) greater than 5.0 W⁻¹db⁻¹ measured at a pump wavelength of approximately 1453 nm.

4. An optical fiber according to claim 1, wherein the fiber has a peak Raman gain coefficient greater than 2.0 W⁻¹km⁻¹ measured at a pump wavelength of approximately 1453 nm.

5. An optical fiber according to claim 1, wherein the fiber has an effective area of less than 25 µm² at a wavelength of approximately 1550 nm.

6. An optical fiber according to claim 1, wherein the fiber has a dispersion (D) such that 0 > D > -100 ps/nm/km at a wavelength of approximately 1550 nm.

7. An optical fiber according to claim 1, wherein the fiber has a relative dispersion slope (RDS) greater than 0.005 nm⁻¹ at a wavelength of approximately 1550 nm.

8. An optical fiber according to claim 1, wherein a length of the fiber that is more than about three meters is operative as a single mode fiber at a wavelength of approximately 1550 nm.

9. An optical fiber according to claim 1, wherein the fiber has a polarization mode dispersion (PMD) of less than 0.2 ps/√km.

10. A fiber optic dispersion slope compensating module (DSCM), comprising:
a first dispersion compensating fiber having a signal input end and an output end opposite the signal input end;
a pump light source coupled to the first fiber in such a manner as to obtain Raman amplification with respect to a light signal applied to the signal input end of the first fiber; and
the first fiber comprises a central core and an outer cladding, and has a refractive index profile through a cross section of the fiber with respect to the outer cladding;
wherein the core has a diameter of between 2 and 5 microns (µm) and a difference (Δn) between the refractive index of the core and the outer cladding that is between 0.012 and 0.035;
the first fiber includes a trench region adjacent the core, a ring region adjacent the trench region, and an inner cladding intermediate the ring region and the outer cladding;
the trench region has a width in said index profile of between 2 and 6 µm and a negative Δn of between -0.015 and -0.003;
the ring region has a width in said index profile of between 1 and 5 µm and a Δn of between 0.001 and 0.015; and
the inner cladding has a width in said index profile of between 0 and 5 µm and a Δn of between -0.011 and 0.001.

11. A DSCM according to claim 10, wherein the outer cladding of the first fiber has an overall diameter of between 80 and 200 µm.

12. A DSCM according to claim 10, including a second, dispersion compensating fiber connected serially with respect to the first fiber, wherein lengths of the first and the second fibers are selected to attain a desired dispersion and dispersion slope compensation with respect to a given transmission fiber in a fiber optic transmission system.

13. A fiber optic transmission system comprising an optical transmitter, and optical receiver, a span of a transmission fiber forming part of a light signal path between the transmitter and the receiver, and a DSCM according to claim 10 which is operatively connected to the transmission fiber for dispersion compensation.

14. The transmission system of claim 13, wherein the transmission fiber is a non-zero dispersion fiber (NZDF).

15. A fiber optic transmission system comprising an optical transmitter, and optical receiver, a span of a transmission fiber forming part of a light signal path between the transmitter and the receiver, and a DSCM according to claim 12 which is operatively connected to the transmission fiber for dispersion compensation.

16. The transmission system of claim 15, wherein the transmission fiber is a NZDF.
